# EUROPÄISCHE PATENTSCHRIFT

(11) **EP 0 413 119 B1**
(45) Veröffentlichungstag und Bekanntmachung des Hinweises auf die Patenterteilung: **12.05.1993**
(21) Anmeldenummer: 90112660.7
(22) Anmeldetag: 03.07.1990
(51) Int. Cl.: F16C 19/00, B66C 23/84, F16C 19/52

(54) **Mittenfreies Grosswälzlager**
Center open large rolling bearing
Grand palier à roulement à centre ouvert

(30) Priorität: 17.08.1989 DE 3927077
(43) Veröffentlichungstag der Anmeldung: 20.02.1991
(73) Patentinhaber: Fried. Krupp AG Hoesch-Krupp, 44145 Dortmund (DE)
(72) Erfinder: Andree, Dietrich, Dipl.-Ing., D-4600 Dortmund 70 (DE); Becker, Dieter, Dipl.-Ing., D-4780 Lippstadt-Esbeck (DE); Siemensmeyer, Heinrich, Dipl.-Ing., D-4600 Dortmund 50 (DE); Wozniak, Johannes, Dr.-Ing., D-4780 Lippstadt 6 (DE)

(56) Entgegenhaltungen:
- EP-A- 0 228 731

## Beschreibung

Die Erfindung betrifft ein mittenfreies Großwälzlager nach dem Oberbegriff des Anspruchs 1.

Für verschiedene Einsatzfälle bei Großwälzlagern ist es sinnvoll, eine Ultraschallprüfvorrichtung vorzusehen, die es erlaubt, Materialfehler zerstörungsfrei festzustellen, ohne das Lager ausbauen zu müssen. Dieses betrifft insbesondere Großwälzlager als Drehverbindung für Krane im Offshorebetrieb.

Nach der EP-A-228 731, aus der ein mittenfreies Großwälzlager gemäß Oberbegriff des Anspruchs 1 bekannt ist, wird vorgeschlagen, in wenigstens einem Lagerring wenigstens eine Öffnung anzuordnen, in die eine Ultraschallsonde eingesetzt werden kann. Über eine Koppelfläche am anderen Lagerring sollen dann Materialfehler in diesem anderen Lagerring erkannt werden. Nachteilig bei dieser Ausbildung ist es, daß die Ultraschallsonde im Bereich der Laufbahnen eingesetzt wird. Dadurch ist es erforderlich, in diesem Bereich mindestens teilweise das Schmierfett zu entfernen und zum Teil die Koppelfläche zu säubern. Abriebpartikel, die sich ebenfalls in diesem Bereich absondern, können darüber hinaus zu Fehlmessungen führen. Weiterhin ergibt sich bei längerer Betriebszeit des Lagers eine Erhöhung des Lagerspiels durch den zulässigen Verschleiß. Durch dieses erhöhte Lagerspiel verschiebt sich die Koppelfläche zur Lage der Ultraschallsonde, wodurch ebenfalls Fehlmessungen entstehen können.

Der Erfindung liegt die Aufgabe zugrunde, die vorbeschriebenen Nachteile zu vermeiden und das Lager so auszubilden, daß eine einfache und sichere Ultraschallmessung möglich wird.

Diese Aufgabe wird erfindungsgemäß durch die Merkmale des Anspruchs 1 gelöst.

Vorteilhafte und zweckmäßige Ausbildungen werden in den Ansprüchen 2 bis 5 beschrieben.

Die Gestaltung eines Großwälzlagers nach der Erfindung ermöglicht vorteilhaft eine einfache Anordnung von Ultraschallsonden. Es ist nicht mehr erforderlich, diese an unzugänglichen Stellen einzubringen, da die Koppelflächen für die Ankopplung der Ultraschallsonde umlaufend an den Außenflächen des zu prüfenden Lagerringes angeordnet sind. Weiterhin müssen für die Messungen keine besonderen Vorbereitungen mehr getroffen werden. Es ist lediglich die Korrosionsschutzschicht bzw. der Abdeckring oder ein Abdeckband von der Koppelfläche zu entfernen. Evtl. eingetretenes Lagerspiel, wie auch Abriebpartikel, die sich im Bereich der Laufbahnen ansammeln können, haben keine Auswirkung auf die Genauigkeit der Messung. Weiterhin ist in Verlängerung der Schallrichtung von Koppelfläche zum Untersuchungsbereich senkrecht zu dieser eine umlaufende Referenzfläche vorgesehen. Durch diese Maßnahme erhält man ein einwandfreies Rückwandecho und damit eine genaue Aussage über die Lage eines eventuellen Fehlers.

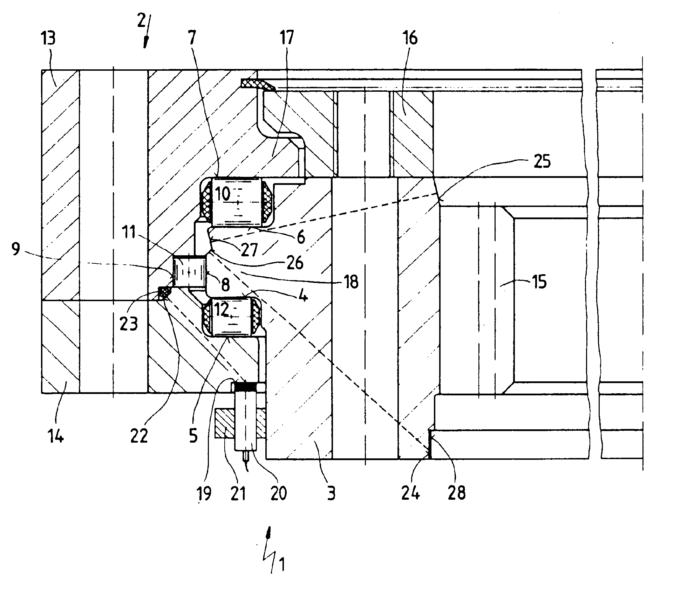

Ein Ausführungsbeispiel der Erfindung ist in der Zeichnung dargestellt und wird im folgenden näher beschrieben. Die Zeichnung zeigt einen Schnitt durch eine Hälfte eines mittenfreien Großwälzlagers.

Das Großwälzlager 1 besteht aus einem Außenring 2 und einem Innenring 3, zwischen denen auf Laufbahnen 4, 5, 6, 7, 8, 9 Wälzkörper 10, 11, 12 angeordnet sind. Im Ausführungsbeispiel handelt es sich bei dem Großwälzlager 1 um eine dreireihige Rollendrehverbindung, bei der der Außenring 2 aus zwei Einzelringen 13, 14 zusammengesetzt ist.

Der Innenring 3 ist zum Drehantrieb mit einer Verzahnung 15 ausgebildet. Zum Katastrophenschutz ist dem Innenring 3 eine Haltevorrichtung 16 zugeordnet, die einen Kragen 17 des Einzelringes 13 formschlüssig übergreift. Der Innenring 3 ist mit einer Nase 18 versehen, an der umlaufend alle drei Laufbahnen 4, 6, 8 des Innenringes angeordnet sind. Zwischen dieser Nase 18 und dem Außenring 2 sind die Tragrollen 10, die Radialrollen 11 und Halterollen 12 angeordnet.

Im Ausführungsbeispiel wird als rißgefährdeter Bereich im Einzelring 14 des Außenringes 2 der Übergang zur Halterollenlaufbahn 5 angesehen. Im Innenring 3 werden als rißgefährdete Bereiche ebenfalls der Übergang zur Halterollenlaufbahn 4 sowie der Übergang zur Tragrollenlaufbahn 6 angesehen. Dementsprechend wird an der Außenfläche des Außenringes 2 eine Koppelfläche 19 angeordnet, an der eine Ultraschallsonde 20 angekoppelt werden kann. Diese Sonde wird über eine Haltevorrichtung 21 am Innenring 3 befestigt. Die Haltevorrichtung kann beispielsweise ein Magnetfuß sein. Die Ultraschallsonde 20 sendet die Prüfimpulse unter einem Winkel, so daß der gefährdete Bereich am Übergang zur Halterollenbahn 5 optimal erfaßt wird. In Verlängerung der Schallrichtung ist eine Referenzfläche 22 vorgesehen. Diese Referenzfläche 22 dient zur Kontrolle und Eichung der Ultraschallmessung. Im beschriebenen Ausführungsbeispiel wird hierzu eine ohnehin benötigte Fläche zur Aufnahme einer Dichtung 23 genutzt. In gleicher Weise sind am Innenring 3 zwei Koppelflächen 24, 25 angeordnet. Wie in der Zeichnung dargestellt, ist es denkbar, daß die Ultraschallsonde 20 die Prüfimpulse unter einem beliebigen Winkel zur Koppelfläche 25, 24 sendet oder auch, wie zur Koppelfläche 25 senkrecht. An der Koppelfläche 24 ist ein Abdeckband 28 dargestellt. Die Referenzflächen 26, 27 sind im Ausführungsbeispiel am Außendurchmesser der Nase anschließend an die Radialrollenlaufbahn 8 angeordnet.
- 1: Großwälzlager
- 2: Außenring
- 3: Innenring
- 4: Halterollenlaufbahn
- 5: Halterollenlaufbahn
- 6: Tragrollenlaufbahn
- 7: Tragrollenlaufbahn
- 8: Radialrollenlaufbahn
- 9: Radialrollenlaufbahn
- 10: Tragrollen
- 11: Radialrollen
- 12: Halterollen
- 13: Einzelring
- 14: Einzelring
- 15: Verzahnung
- 16: Haltevorrichtung
- 17: Kragen
- 18: Nase
- 19: Koppelfläche
- 20: Ultraschallsonde
- 21: Haltevorrichtung
- 22: Referenzfläche
- 23: Dichtung
- 24: Koppelfläche
- 25: Koppelfläche
- 26: Referenzfläche
- 27: Referenzfläche
- 28: Abdeckband

## Patentansprüche

1. Mittenfreies Großwälzlager (1), bestehend aus ein- oder mehrteilig ausgebildetem Außenring (2) und Innenring (3) und zwischen ihnen angeordneten, auf Laufbahnen (4, 5, 6, 7, 8, 9) abwälzenden Wälzkörpern (10, 11, 12), bei dem ein Ring zur Aufnanme einer Ultraschallsonde (20) ausgebildet ist und der andere, zu prüfende Ring eine Koppelfläche (19, 24, 25) für die Ankopplung der Ultraschallsonde (20) an seiner Außenfläche umlaufend angeordnet aufweist, **dadurch gekennzeichnet**, daß die als Koppelfläche (19, 24, 25) dienende Außenfläche so angeordnet ist, daß sie sich außerhalb der einander zugewandten Flächen von Außenring (2) und Innenring (3) befindet.

2. Mittenfreies Großwälzlager nach Anspruch 1, dadurch gekennzeichnet, daß die Koppelfläche (19, 24, 25) mit einer Korrosionsschutzschicht versehen ist.

3. Mittenfreies Großwälzlager nach Anspruch 1 und/oder 2, dadurch gekennzeichnet, daß die Koppelfläche (19, 24, 25) mit einem Abdeckring oder einem Abdeckband (28) versehen ist.

4. Mittenfreies Großwälzlager nach einem der Ansprüche 1 bis 3, dadurch gekennzeichnet, daß an einer Außenfläche des zur Aufnahme der Ultraschallsonde ausgebildeten Ringes oder der zugehörigen Anschlußkonstruktion eine Haltevorrichtung (21) für die Ultraschallsonde (20) anbringbar ist.

5. Mittenfreies Großwälzlager nach einem der Ansprüche 1 bis 4, dadurch gekennzeichnet, daß in Verlängerung der Schallrichtung, die von Koppelfläche (19, 24, 25) zum zu prüfenden Bereich des zu prüfenden Ringes verläuft, senkrecht zu dieser eine umlaufende Referenzfläche (22, 26, 27) an dem zu prüfenden Ring vorgesehen ist.

## Claims

1. Large roller bearing (1) with a free space in the middle, comprising an outer (2) and an inner ring (3), which are formed of one or more parts, and rolling members (10, 11, 12), which are disposed between them and which roll on raceways (4, 5, 6, 7, 8, 9), in which one ring is formed to hold an ultrasonic probe (20) and the other ring to be tested has a coupling face (19, 24, 25) for coupling the ultrasonic probe (20) to its outer face arranged circumferentially, characterised in that the outer face acting as the coupling face (19, 24, 25) is arranged in such a way that it is located outside the faces which face each other of the outer ring (2) and the inner ring (3).

2. Large roller bearing with a free space in the middle as in claim 1, characterised in that the coupling face (19, 24, 25) is provided with an anti-corrosive layer.

3. Large roller bearing with a free space in the middle as in claim 1 and/or 2, characterised in that the coupling face (19, 24, 25) is provided with a cover ring or a cover band (28).

4. Large roller bearing with a free space in the middle as in any of claims 1 to 3, characterised in that a holding device (21) for an ultrasonic measuring probe (20) can be mounted on an outer surface of the ring or the associated connection construction.

5. Large roller bearing with a free space in the middle as in any of claims 1 to 4, characterised in that, in extension of the sound device which runs from the coupling face (19, 24, 25) to the region to be tested of the ring to be tested, a circumferential reference face (22, 26, 27) is provided on the ring to be tested and perpendicular to the coupling face (19, 24, 25).

## Revendications

1. Couronne d'orientation (1) à centre ouvert, consistant en une bague interne (3) et une bague externe (2) en une ou plusieurs pièces avec, disposés entre elles, des corps de roulement (10, 11, 12) roulant sur des chemins de roulement (4, 5, 6, 7, 8, 9), dans laquelle une bague est réalisée pour recevoir une sonde (20) à ultra-sons, et l'autre bague, à tester, présente une surface de couplage, (19, 24, 25) disposée de manière à entourer sa surface externe, pour coupler la sonde à ultra-sons (20) caractérisée en ce que la surface externe servant de surface de couplage (19, 24, 25) est disposée de telle sorte qu'elle se trouve en dehors des surfaces tournées l'une vers l'autre de la bague externe (2) et de la bague interne (3).

2. Couronne d'orientation selon la revendication 1, caractérisée en ce que la surface de couplage (19, 24, 25) est munie d'une couche de protection contre la corrosion.

3. Couronne d'orientation selon la revendication 1 et/ou la revendication 2, caractérisée en ce que la surface de couplage (19, 24, 25) est munie d'un anneau de recouvrement ou d'une bande (28) de recouvrement.

4. Couronne d'orientation selon l'une quelconque des revendications 1 à 3, caractérisée en ce qu'un dispositif (21) de maintien de la sonde (20) à ultra-sons peut être installé sur une face externe de la bague prévue pour recevoir la sonde à ultra-sons ou du bâti de raccordement qui en fait partie.

5. Couronne d'orientation selon l'une des revendications 1 à 4, caractérisée en ce qu'une surface de référence (22, 26, 27) périphérique est prévue sur la bague à tester, dans le prolongement de la direction de rayonnement qui va de la surface de couplage (19, 24, 25) vers la zone à tester de la bague à tester, perpendiculairement par rapport à celle-ci.
